# DEMANDE DE BREVET EUROPEEN

(11) **EP 1 881 514 A1**
(43) Date de publication de la demande: **23.01.2008**
(21) Numéro de dépôt: 07112471.3
(22) Date de dépôt: 13.07.2007
(51) Int. Cl.: H01H 19/14

(54) **Dispositif de commande à détection de position**

(30) Priorité: 18.07.2006 FR 0606575
(71) Demandeur: Valeo Systèmes Thermiques, 78320 Le Mesnil Saint Denis (FR)
(72) Inventeur: Huynh, Tan Duc, 93330, Neuilly sur Marne (FR)
(74) Mandataire: Léveillé, Christophe

(57) **Abrégé**

L'invention concerne un détecteur de position d'un axe de commande (10, 23, 35, 42) qui comporte au moins un moyen de commutation (60, 62 ; 74, 76) coopérant avec au moins un commutateur (64 ; 70) propre à déterminer au moins une position de l'axe de commande (10, 23, 35, 42).

## Description

L'invention concerne un détecteur de position d'un axe de commande. Notamment, l'invention se rapporte à un tableau de commande comportant des boutons de commande de diverses fonctions regroupées sur un même interface, et plus particulièrement un tableau de commande d'une installation de chauffage, ventilation et/ou climatisation, notamment pour un habitacle de véhicule automobile.

Elle concerne plus particulièrement un tableau de commande propre à regrouper plusieurs boutons de commande destinés à commander différentes fonctions agencées sur un même boîtier.

On connaît déjà un tableau de commande de ce type qui comprend trois boutons de commande rotatifs coaxiaux, à savoir un bouton extérieur, un bouton intérieur et un bouton intermédiaire. Chacun des boutons extérieur et intermédiaire est solidaire d'une denture extérieure disposée à l'intérieur du boîtier du tableau de commande, de manière à entraîner un secteur denté par l'intermédiaire d'un arbre parallèle à l'axe des boutons. Un tel dispositif est décrit dans la demande de brevet Français FR-A-2 836 730.

De tels agencements permettent de commander divers organes et/ou fonctions dans un volume restreint tout en conservant une ergonomie d'utilisation.

Néanmoins, de tels dispositifs font intervenir des engrenages qui assurent la transmission du mouvement de rotation du bouton de commande aux organes que commandent ces boutons. L'indexation des positions se fait par des encoches et des pointeurs venant coopérer dans des positions précises.

Afin de gérer les positions de fin de course des boutons de commandes, il est impératif d'obtenir une information fiable de celles-ci.

De plus, dans les installations actuelles, faisant intervenir des encodeurs, la position du bouton par rapport aux pistes de l'encodeur est relative. En effet, l'information primordiale est l'amplitude angulaire réalisée par le bouton par rapport aux pistes de l'encodeur indépendamment de la position initiale du bouton de commande.

Enfin, dans le cadre de tableaux de commande combinant des commandes mécaniques et électroniques, le bouton de commande prend différentes positions dans lesquelles des commandes de types différents sont transmises aux divers organes commandés. Il peut être souhaitable d'avoir une information sous la forme d'un signal électrique qu'une position particulière est atteinte.

L'objet de la présente invention est de surmonter les inconvénients précités. A cet effet, l'invention propose un détecteur de position d'un axe de commande comportant au moins un moyen de commutation coopérant avec au moins un commutateur propre à déterminer au moins une position de l'axe de commande.

Grâce à l'invention, il est possible d'obtenir une information caractéristique de la position de l'axe de commande suite à une action de commande par l'utilisateur sur une zone de préhension reliée à l'axe de commande.

De plus, selon une alternative de réalisation, le moyen de commutation est une excroissance disposée en périphérie de l'axe de commande. Cette excroissance s'étend radialement en définissant une nervure de commutation ou axialement en définissant une dent de commutation.

En complément, l'axe de commande comprend plusieurs nervures de commutation réparties angulairement sur la périphérie de l'axe de commande. De façon préférentielle, elles sont de hauteurs différentes en association avec le commutateur qui définit au moins trois positions de commutation. Un tel agencement permet de constituer un organe de détection de plusieurs positions et/ou de transmettre différentes informations en fonction des positions détectées. De plus, il est également envisageable que les nervures de commutation s'étendent sur les arcs de cercles de longueurs différentes afin d'assurer une commutation continue lors de la rotation de l'axe de commande selon un espace angulaire donné.

Selon un mode de réalisation, les trois positions de commutations sont une position de repos et au moins deux positions d'interruption. Les deux positions d'interruption sont actionnées par les nervures de commutation de hauteurs différentes.

Selon un mode préféré de réalisation, le commutateur est un contacteur électrique. Alternativement, il peut être une lame métallique conductrice électriquement, un encodeur optique ou un détecteur magnétique à effet Hall.

Dans une variante de réalisation, l'axe de commande est en liaison avec un encodeur rotatif fournissant une première information de commande. Il est avantageux en ce cas que le commutateur fournisse une deuxième information de commande propre à pondérer la première information de commande.

Selon cette réalisation, l'encodeur rotatif comporte au moins une piste électriquement conductrice qui, avantageusement, comporte au moins un secteur d'identification de position. La piste électriquement conductrice fait office de commutateur et au moins un contact électrique agit en tant que moyen de commutation.

Préférentiellement, le détecteur de position permet de déterminer une position de fin de course de l'axe de commande.

Selon la présente invention, la notion de fin de course fait, notamment, référence à au moins une position de butée dans laquelle la commande est mécaniquement arrêtée. De façon générale, il existe deux positions de fin de course disposées aux extrémités d'un arc de cercle respectivement dans le sens horaire et dans le sens anti-horaire.

Néanmoins, pour des besoins particuliers, il peut être souhaitable d'identifier une position de fin de course intermédiaire. La présente invention répond également à cette exigence.

Un autre but de l'invention est de proposer un tableau de commande comportant au moins un détecteur de position ayant l'une des caractéristiques évoquées précédemment.

On préfère tout particulièrement un tableau de commande comportant plusieurs axes de commandes disposant respectivement de moyens de commutation associés à des commutateurs respectifs.

De façon préférentielle, l'axe de commande est en liaison avec une zone de préhension faisant saillie d'une façade du tableau de commande.

L'invention vise à améliorer la présente situation. C'est en conséquence un des buts de l'invention de proposer un détecteur de position du type précité qui permet d'obtenir une information précise et fiable de la position du bouton de commande.

D'autres avantages et caractéristiques de l'invention apparaîtront à la lecture de la description qui suit. Cette description est purement illustrative et donnée à titre d'exemple et doit être lue en se référant aux dessins annexés sur lesquels on a représenté :
- la figure 1 est une vue en éclaté d'un tableau de commande comprenant un détecteur de position selon un premier mode de réalisation de la présente invention,
- la figure 2 est une vue est une coupe d'un exemple de réalisation de la figure 1 selon une première variante de détecteur de position,
- la figure 3 est une vue est une coupe d'un exemple de réalisation de la figure 1 selon une deuxième variante de détecteur de position,
- la figure 4 est une vue en perspective d'un tableau de commande selon un second mode de réalisation de la présente invention.

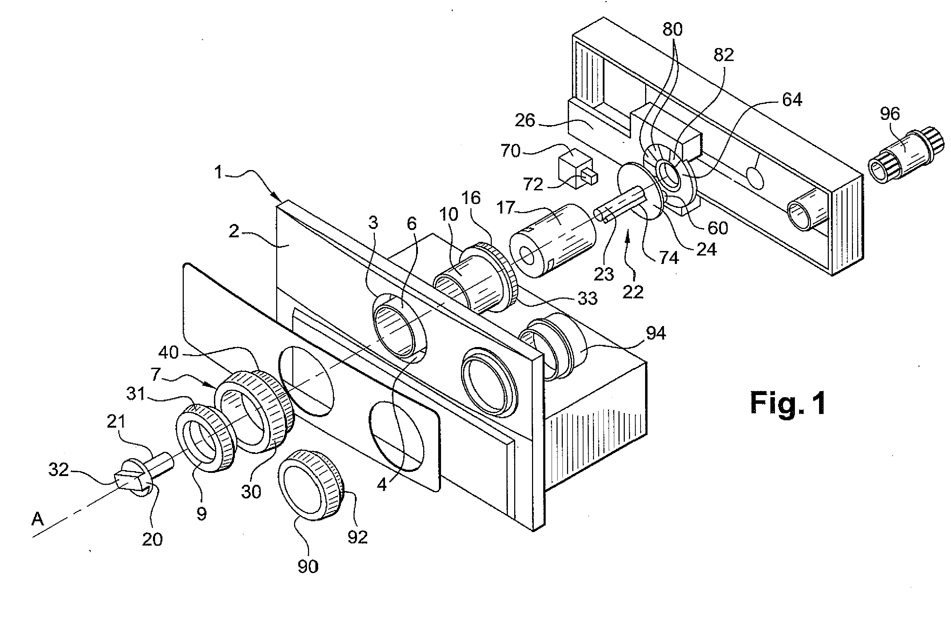

Le tableau de commande illustré en figure 1 comprend détecteur de position et est formé de plusieurs éléments assemblés entre eux. Un tel tableau de commande est notamment destiné à être fixé sur la planche de bord d'un véhicule automobile. L'un des éléments du boîtier est une façade 1 constituée par une pièce moulée en matière plastique définissant une paroi plane 2 qui présente une face extérieur.

La façade 1 est, en particulier, destinée à être intégrée à la planche de bord et tournée vers l'habitacle du véhicule. La paroi 2 présente une ouverture circulaire 3 pour recevoir des pièces rotatives coaxiales dont font partie des boutons de commande.

L'ouverture 3 de la façade 1 constitue un canal annulaire servant de guidage à un bouton de commande 7 disposé en saillie vers l'extérieur du boîtier par rapport à la paroi 2. La partie arrière du bouton 7 porte une denture extérieure 40 qui coopère avec un pignon, non représenté, monté dans le boîtier. Le bouton 7 dispose sur sa périphérie d'une zone de manoeuvre ou de préhension 30.

Un deuxième bouton rotatif annulaire 9 est disposé dans le tableau de commande. Il est solidaire d'un tube 10 avec lequel il forme une deuxième pièce rotative. Le tube 10 présente une partie cylindrique qui traverse la façade 1 et vient se ficher dans le bouton 9. Le bouton 9 comporte également une zone de manoeuvre ou de préhension 31 agencée de telle façon que qu'elle se superpose axialement à la zone manoeuvre ou de préhension 30 du bouton 7. On définit ainsi une commande double dans un faible espace.

Le tube 10 définit également un passage axial qui est traversé par un manchon 17 centré axialement par rapport aux boutons 7 et 9. Le manchon 17 est connecté à un troisième bouton de commande 20. Il forme ainsi une troisième pièce rotative guidée en rotation.

La partie arrière 16 du tube 10 porte une denture extérieure 33 qui coopère avec un pignon, non représenté, monté dans le boîtier.

Le bouton 20 est constitué d'un axe 21 qui traverse un alésage axial réalisé dans le manchon 17 et d'un organe de manoeuvre ou de préhension 32. L'axe 21 est solidarisé à un encodeur rotatif 22 qui comprend une partie tubulaire 23 reliée à l'axe 21 et un disque 24.

Le tableau de commande décrit comprend donc trois boutons de commande propres à tourner autour du même axe A, à savoir un bouton extérieur 7, un bouton intermédiaire 9 et un bouton intérieur 20. Ces boutons présentent des zones de manoeuvre ou de préhension respectives 30, 31 et 32 destinées à être actionnées par les doigts d'un utilisateur dans un mouvement de rotation.

Toutefois, selon une alternative de réalisation, le troisième bouton de commande 20 peut être du type 'à poussoir'. Ainsi, la commande associée au bouton de commande 20 est actionnée par une action sur le bouton 20 dans la direction axiale.

Selon la présente invention, un commutateur est agencé sur une paroi 26 du boîtier du tableau de commande. Préférentiellement, le commutateur est un contacteur électrique 70 disposant d'un contact 72 faisant saillie vers l'extérieur du contacteur électrique 70. En complément, la partie tubulaire 23 comporte une excroissance formant une nervure de commutation 74 disposée à sa périphérie. La nervure de commutation 74 s'étend axialement.

Le contacteur 70 et la nervure de commutation 74 sont disposés de façon à ce que le contact 72 soit actionné lors du passage de la nervure de commutation 74 au droit du contact 72. Ainsi, par variation angulaire du bouton 20, la partie tubulaire 23 est entraînée en rotation. On modifie ainsi une première information fournie par l'encodeur rotatif constitué des contacts électriques 60 et 62 et des pistes électriques 64 présents sur la paroi 26 du boîtier. De même, la rotation de la partie tubulaire 23 permet d'actionner le contacteur électrique 70. L'actionnement du contacteur électrique 70 permet de transmettre une deuxième information de position du bouton 20. La deuxième information de position ainsi reçue peut être transmise à une calculateur ou à un organe de traitement (non représenté) afin de pondérer la première information reçue de l'encodeur rotatif ou d'influencer le fonctionnement d'un organe commandé ou un afficheur.

On voit sur la figure 1 que le tableau de commande illustré comprend, à droite des boutons coaxiaux décrits, un autre bouton rotatif 90. Cet autre bouton est destiné à commander un organe additionnel. Il présente une zone de manoeuvre 92 coopérant avec un tube 94. Le tube 94 présente une denture intérieure qui coopère avec un pignon appartenant à un arbre 96, monté dans le boîtier de manière à tourner autour d'un axe parallèle à l'axe du bouton 90. De façon identique à la partie tubulaire 23, l'axe 96 peut comporter des moyens de commutations coopérant avec un commutateur afin de définir la position de l'axe 96 et du bouton de rotatif 90.

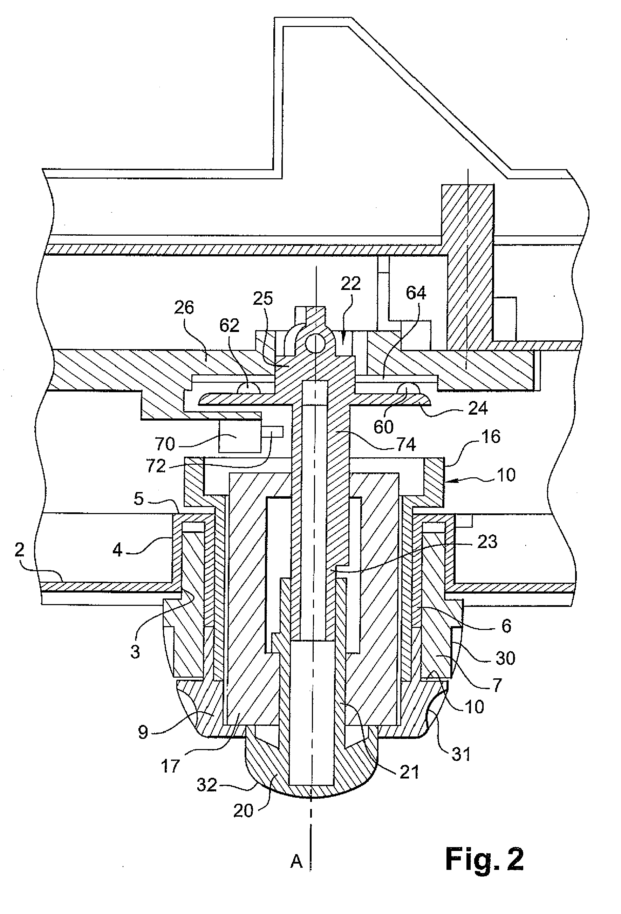

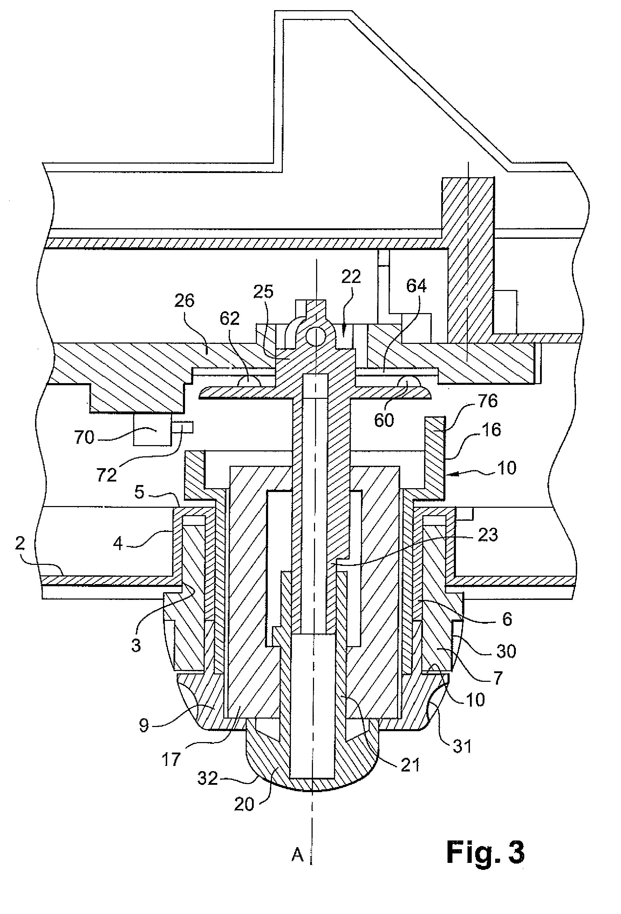

On se réfère dorénavant aux figures 2 et 3 qui présentent une vue en coupe du tableau de commande de la figure 1 présentant deux variantes de réalisation de la présente invention. Selon l'exemple de réalisation décrit, la façade 1 forme, à la périphérie de l'ouverture 3, un canal annulaire composé d'une jupe cylindrique radialement extérieure 4 qui se raccorde à la paroi 2 au bord de l'ouverture 3 et s'étend parallèlement à l'axe A vers l'intérieur du boîtier, d'un fond plan 5 s'étendant radialement vers l'intérieur du boîtier à partir de la jupe 4, et d'une jupe cylindrique radialement intérieure 6 s'étendant vers l'extérieur du boîtier à partir du fond 5, parallèlement à l'axe A et au-delà du plan de la paroi 2.

Avantageusement, le canal 4-6 sert au guidage au premier bouton de commande 7. Il comporte également un passage axial qui permet le guidage du tube 10 relié au bouton 9.

Le troisième bouton 20 est en liaison avec le disque 24 par l'assemblage en coopération de l'axe 21 et de la partie tubulaire 23. En arrière du disque 24, l'encodeur rotatif 22 comprend une partie cylindrique 25 qui est guidées dans un alésage d'une paroi intérieure 26 du boîtier. Le disque 24 porte sur sa face arrière des contacts électriques 60 et 62 qui coopèrent avec des pistes électriques 64 comportant plusieurs secteurs électriquement conducteurs 80 portées par la paroi 26 afin d'assurer la fonction d'encodage et ainsi modifier, en fonction de la position angulaire du bouton 20, un organe commandé, notamment un circuit d'alimentation d'un groupe moto-ventilateur d'une installation de climatisation du véhicule. Un tel commutateur permet, par exemple, de commander la mise en marche, l'arrêt et le réglage de la vitesse du ventilateur.

Selon un exemple de réalisation, les pistes électriques 64 comportent au moins un secteur d'identification de position 82. Ces secteurs d'identification 82 peuvent être, notamment, intercalés avec les secteurs électriquement conducteurs 80. Ces secteurs d'identification 82 sont associés avec des positions précises du bouton de commande. Ainsi, lors de la rotation du disque 24, les contacts électriques 60 et 62 parcourent les secteurs électriquement conducteurs des pistes électriques 64. Lorsque que ces derniers sont sur un secteur d'identification, une information de position précise est ainsi détectée. Il assure ainsi la transmission de la position de l'axe de commande précisément et de façon fiable.

Les pistes électriques 64 sont préférentiellement disposées sur un arc de cercle. Toutefois, selon une variante de réalisation, il est possible de disposer plusieurs pistes conductrices 64 sur des arcs de cercle concentriques.

Enfin, afin d'assurer des signaux représentatifs d'une information particulière, les secteurs électriquement conducteurs 80 peuvent être de longueur différentes afin de transmettre un signal représentatif identique sur une portion lors de la rotation de l'axe de commande.

Plus particulièrement et selon un exemple particulier de réalisation de la présente invention, les boutons 7 et 9, par l'intermédiaire des mécanismes associés, servent à déplacer des volets tels qu'un volet d'entrée d'air et un volet de mixage, de manière à modifier le circuit de traitement d'air d'une installation de chauffage, ventilation et/ou climatisation.

La figure 2 est une coupe de l'exemple de réalisation décrit à la figure 1. Il présente un contacteur électrique 70 positionné sur la paroi 26 du boîtier. Une excroissance est agencée sur la périphérie de la partie tubulaire 23 s'étendant radialement sur une hauteur finie afin de constituer une nervure de commutation 74.

La figure 3 présente une alternative de réalisation. Selon le mode de réalisation présenté, le contacteur électrique 70 dispose d'un contact 72 faisant saillie vers l'extérieur du contacteur électrique 70. A la différence de l'exemple de réalisation de la figure 2, le contact 72 coopère avec une excroissance radiale formant une dent de commutation 76 prolongeant le tube 10 relié au bouton 9. D'une façon analogue au fonctionnement de la nervure de commutation 74 selon l'exemple de la figure 2, la dent de commutation 76 et le contacteur 70 sont disposés de façon à ce que le contact 72 soit actionné lors du passage de la dent de commutation 76 au droit du contact 72. Ainsi, par variation angulaire du bouton 9, le tube 10 est entraînée en rotation et permet ainsi d'actionner le contacteur électrique 70. L'actionnement du contacteur électrique 70 permet de transmettre une deuxième information de position du bouton 9.

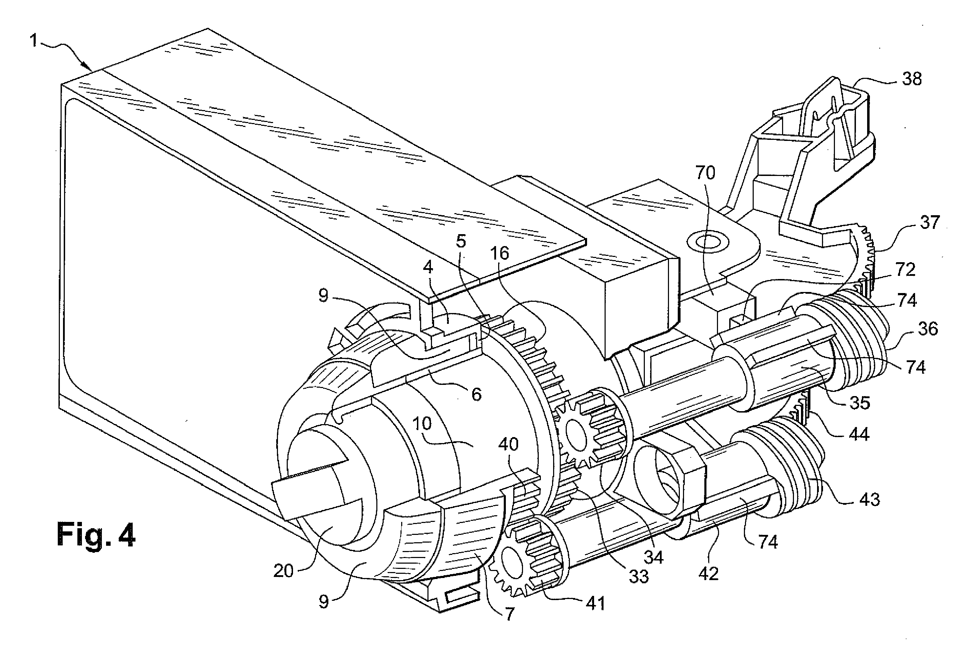

La figure 4 est une autre variante de réalisation de la présente invention. Le tableau de commande de la figure 4 comprend de nombreuses similitudes avec les agencements des figures 1 à 3. En conséquence, les éléments techniques en commun auront les mêmes références que celles en relation avec les figures précédentes.

Dans cet exemple de réalisation, le bouton 7 présente une denture extérieure 40 qui coopère avec un pignon 41 appartenant à un arbre 42, monté dans le boîtier de manière à tourner autour d'un axe parallèle à l'axe des boutons 7, 9 et 20. L'arbre 42 comprend une vis sans fin 43 qui coopère avec un secteur denté 44 monté de manière à tourner autour d'un axe perpendiculaire à l'axe des boutons 7, 9 et 20. Le secteur 44 est formé d'une seule pièce avec un levier radial auquel est fixée une extrémité d'un câble de transmission de mouvement, non représenté.

De façon similaire, la partie arrière 16 du tube 10 porte une denture extérieure 33 qui coopère avec un pignon 34 formé à l'extrémité avant d'un arbre 35, semblable à l'arbre 42. L'extrémité arrière de l'arbre 35 porte une vis sans fin 36 qui coopère avec un secteur denté 37 monté dans le boîtier de façon à tourner autour d'un axe perpendiculaire à l'axe des boutons 7, 9 et 20. Le secteur denté 37 est formé d'une seule pièce avec un bras 38, orienté radialement. Préférentiellement, le bras 38 permet le raccordement d'une extrémité d'un câble de transmission de mouvement non représenté.

L'exemple de réalisation de la figure 4 fait intervenir uniquement des commandes mécaniques. Dans de telles circonstances, des contacteurs électriques 70, dont un seul est visible sur la figure 4, sont disposés dans le boîtier du tableau de commande. Ils sont agencés à proximité des arbres 35 et 42. Ces derniers portent des nervures de commutations 74 aménagées sur leur périphérie. Dans l'exemple de la figure 4, l'arbre 35 porte deux nervures de commutation espacées angulairement. Ceci permet de fournir une information relative à plusieurs positions angulaires du bouton 9 par commutation consécutive du contacteur 70. L'arbre 42 dispose d'une unique nervure de commutation de commutation 74 propre à interagir avec un contacteur électrique 70.

Selon les différentes nécessités d'obtenir des informations propres aux diverses positions d'un axe ou arbre, il est possible de disposer une multitude de nervures propres à actionner un commutateur. Alternativement, les nervures de commutations peuvent être substituée par des plots ou toutes autres formes géométriques agissant en tant qu'élément de commutation et permettant d'actionner le contact 72 du contacteur électrique 70 lors du passage de cet élément de commutation au droit du contact 72. L'ensemble de ces éléments de commutations constitue des moyens de commutation.

Les divers exemples décrits précédemment font intervenir des moyens de commutation mécanique. Toutefois, la présente invention couvre également tous moyens de commutations permettant de générer un signal suite à la rotation d'un arbre ou d'un axe couplé à un bouton de commande. Notamment, la présente invention peut mettre en oeuvre des moyens magnétiques à effet Hall ou optiques qui génèrent un signal représentatif de la position du bouton de commande

Bien évidemment, les formes géométriques faisant office d'éléments de commutation et les divers exemples de réalisations de commutateurs peuvent être combinées dans le cadre de la présente invention afin de remplir diverses fonctions.

L'ensemble des exemples de réalisation décrits précédemment n'est pas limitatif. La présente invention couvre également les combinaisons des divers modes de réalisations entre eux.

La présente invention trouve une application particulière dans les installations de chauffage, ventilation et/ou climatisation de véhicules automobiles dans lesquels un dispositif selon la présente invention est incorporé au tableau de bord du véhicule pour la commande des divers paramètres de l'installation de chauffage, ventilation et/ou climatisation.

Néanmoins, le dispositif selon la présente invention peut être appliquée à tout type d'installation faisant intervenir des dispositifs de commande faisant appel ou nécessitant une détection d'une position particulière et/ou une fin de course.

Bien évidemment, l'invention n'est pas limitée aux modes de réalisation décrits précédemment et fournis uniquement à titre d'exemple et englobe d'autres variantes de réalisation que pourra envisager l'homme du métier dans le cadre des revendications.

## Revendications

1. Détecteur de position d'un axe de commande (10, 23, 35, 42) **caractérisé en ce que** l'axe de commande (10, 23, 35, 42) comporte au moins un moyen de commutation (60, 62 ; 74, 76) coopérant avec au moins un commutateur (64 ; 70) propre à déterminer au moins une position de l'axe de commande (10, 23, 35, 42).

2. Détecteur de position selon la revendication 1, dans lequel le moyen de commutation (60, 62 ; 74, 76) est une excroissance disposée en périphérie de l'axe de commande (10, 23, 35, 42).

3. Détecteur de position selon la revendication 2, dans lequel l'excroissance est une nervure (74) de commutation (74) s'étendant radialement.

4. Détecteur de position selon la revendication 2 ou 3, dans lequel l'axe de commande comprend plusieurs nervures (74) de commutations réparties angulairement sur la périphérie de l'axe de commande (10, 23, 35, 42).

5. Détecteur de position selon la revendication 4, dans lequel les nervures de commutation (74) sont de hauteurs différentes.

6. Détecteur de position selon la revendication 2, dans lequel l'excroissance est une dent de commutation (76) s'étendant axialement.

7. Détecteur de position selon l'une des revendications précédentes, dans lequel le commutateur (70) dispose d'au moins trois positions de commutation.

8. Détecteur de position selon la revendication 7, dans lequel les trois positions de commutations sont une position de repos et au moins deux positions d'interruption.

9. Détecteur de position selon la revendication 8, dans lequel les deux positions d'interruption sont actionnées par les nervures de commutation (74) de hauteurs différentes.

10. Détecteur de position selon l'une des revendications précédentes, dans lequel le commutateur est un contacteur électrique (70).

11. Détecteur de position selon l'une des revendications 1 à 9, dans lequel le commutateur est une lame métallique conductrice électriquement.

12. Détecteur de position selon la revendication 1, dans lequel le commutateur est un détecteur optique.

13. Détecteur de position selon la revendication 1, dans lequel le commutateur est un détecteur magnétique à effet Hall.

14. Détecteur de position selon l'une des revendications précédentes, dans lequel l'axe de commande (10, 23, 35, 42) est en liaison avec un encodeur rotatif (22) fournissant une première information de commande.

15. Détecteur de position selon la revendication 14, dans lequel l'encodeur rotatif (22) comporte au moins une piste électriquement conductrice (64) en tant que commutateur et au moins un contact électrique (60, 62) en tant que moyen de commutation.

16. Détecteur de position selon la revendication 15, dans lequel la piste électriquement conductrice (64) comporte au moins un secteur d'identification de position.

17. Détecteur de position selon la revendication 15 ou 16, dans lequel le commutateur (70) fournit une deuxième information de commande propre à pondérer la première information de commande.

18. Détecteur de position selon l'une des revendications précédentes, dans lequel la position de l'axe de commande détectée est une position de fin de course.

19. Tableau de commande comportant au moins un détecteur de position selon l'une des revendications précédentes.

20. Tableau de commande selon la revendication 19, **caractérisé en ce qu'**il comporte plusieurs axes de commande (10, 23, 35, 42) disposant respectivement de moyens de commutation (74, 76) associés à des commutateurs (70) respectifs.

21. Tableau de commande selon la revendication 19 ou 20, dans lequel l'axe de commande (10, 23, 35, 42) est en liaison avec une zone de préhension (30, 31, 32) faisant saillie d'une façade du tableau de commande.
